(19) Europäisches Patentamt
European Patent Office
Office européen des brevets

(11) **EP 2 554 377 B1**

(12) **EUROPEAN PATENT SPECIFICATION**

(45) Date of publication and mention
of the grant of the patent:
**27.05.2020 Bulletin 2020/22**

(51) Int Cl.:
***B32B 27/32*** *(2006.01)* ***B65B 11/00*** *(2006.01)*

(21) Application number: **12190432.0**

(22) Date of filing: **29.09.2009**

(54) **Barrier films and methods for making and using the same**

Sperrschichtfolie und Verfahren zur Herstellung und Verwendung davon

Films barrières et leurs procédés de fabrication et d'utilisation

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **01.10.2008 EP 08382039**

(43) Date of publication of application:
**06.02.2013 Bulletin 2013/06**

(62) Document number(s) of the earlier application(s) in
accordance with Art. 76 EPC:
**09793104.2 / 2 346 930**

(73) Proprietor: **Dow Global Technologies LLC
Midland, MI 48674 (US)**

(72) Inventors:
• **Domenech, Angels
08031 Barcelona / ES (ES)**
• **Manrique, Antonio
43007 Tarragona / ES (ES)**
• **Nieto, Jesus
43850 Cambrils / ES (ES)**

(74) Representative: **Boult Wade Tennant LLP
Salisbury Square House
8 Salisbury Square
London EC4Y 8AP (GB)**

(56) References cited:
**WO-A2-2009/040129     US-A1- 2005 058 791**

• **E R Reedychemicalfoam: "Safoam FPE-50", , 31
January 2015 (2015-01-31), XP055331980,
Retrieved from the Internet:
URL:http://agripak.com/wp-content/datashee
t/SAFOAM FPE-50 tsb.pdf [retrieved on
2017-01-04]**

**Description**

BACKGROUND

Polymeric films have wide application in packaging because the properties of polymeric films can be tailored for a desired end use. Overwrap films, for example, are used for packaging goods, foodstuffs, forage crops and balage. In such applications, it is important for the overwrap film to have good barrier properties, good mechanical, cling, and stretch properties, good toughness, and strong resistance to puncture, impact, and tear.

US-A-2005/0058791 discloses a multilayer film that includes at least one microporous layer formed from an oxygen impermeable composition disposed between outer layers formed from at least one heat sealable composition.

The art maintains a continuous interest and need for packaging films with improved barrier properties, toughness, tear, puncture, and impact resistance while simultaneously providing flexibility and resilience for use with packaging and wrapping machines.

SUMMARY

The present disclosure is directed to multilayer films with improved barrier properties. The present films also have mechanical tear, impact, puncture, and processability properties suitable for packaging applications and stretch packaging in particular.

The present disclosure provides a multilayer film comprising: an inner layer located between a first outer layer and a second outer layer, the inner layer consisting of a component selected from the group consisting of (a) a high density polyethylene that is an ethylene/butene copolymer having a density from 0.940 g/cc to 0.970 g/cc as measured using ASTM D792-00, Method B, a melt index from 0.1 g/10 min to 10 g/10 min as measured using ASTM D-1238-04, condition 190°C/2.16 kg and a crystallinity from 40% to 60%, (b) a propylene homopolymer having a density from 0.88 g/cc to 0.92 g/cc as measured using ASTM D792-00, Method B, a melt flow rate from 1.0 g/10 min to 2.1 g/10 min as measured using ASTM D-1238-04, condition 230°C/2.16 kg, and a crystallinity from 40% to 60% and (c) a propylene/ethylene copolymer having a density from 0.85 g/cc to 0.95 g/cc as measured using ASTM D792-00, Method B, a melt flow rate from 0.1 g/10 min to 2.0 g/10 min as measured using ASTM D-1238-04, condition 230°C/2.16 kg, and a crystallinity from 20% to 40%;

the first outer layer and the second outer layer being the same or different, each outer layer consisting of a linear low density polyethylene that is an ethylene/octene copolymer having a density from 0.91 g/cc to 0.93 g/cc as measured using ASTM D792-00, Method B, a melt index from 0.1 g/10 min to 10 g/10 min as measured using ASTM D-1238-04, condition 190°C/2.16 kg, and a crystallinity from 40% to 50%, wherein a thickness of at least one outer layer is greater than the thickness of the inner layer, the multilayer film having a thickness from 1 $\mu$m (micron) to 100 $\mu$m (microns), the multilayer film having an oxygen transmission rate less than 10,800 cc/m$^2$/24hr as measured in accordance with ASTM D 3985-05.

In an embodiment, a method for producing bale silage is provided. The method includes wrapping a wrapping film around a bale of a forage crop and forming an airtight barrier around the bale with the wrapping film. The method includes preventing less than 10,800 cc/m$^2$/24hr of oxygen through the barrier.

The wrapping film can be any embodiment of the multilayer film, stretch or un-stretched. In an embodiment, the method includes stretching the film during the wrapping.

In an embodiment, the method includes forming the airtight barrier with from 1 wt % to 40 wt % less film based on the weight of an airtight bather formed by way of a conventional bale silage wrapping procedure using a film composed of LLDPE.

An advantage of the present disclosure is the provision of a multilayer film with improved gas bather and/or water bather properties.

An advantage of the present disclosure is the provision of a multilayer film with improved oxygen bather properties.

An advantage of the present disclosure is the provision of a multilayer film with improved barrier properties and impact, tear, and puncture resistance suitable for balage applications.

An advantage of the present disclosure is the provision of a multilayer balage wrapping film with improved barrier properties that can be used with conventional balage wrapping equipment.

DETAILED DESCRIPTION

The present disclosure is directed to multilayer films with improved gas barrier properties. The present films provide desirable stretch and cling properties for packaging applications and further provide a low oxygen transmission rate.

The film has a thickness from 1 μm (micron) to 100 μm (microns). The film has an oxygen transmission rate ("OTR") less than 10,800 cc/m$^2$/24hr as measured in accordance with ASTM D 3985-05. The OTR can be from 4000 cc/m$^2$/24hr to 10,000 cc/m$^2$/24hr, of from 5,000 cc/m$^2$/24hr to 9,000 cc/m$^2$/24hr.

The film can be a layer of a multilayer layer film. The film can be stretched or un-stretched. The film has a thickness from a 1 (μm) to 100 μm or from 20 μm to 90 μm, or from 30 μm to 80 μm.

Linear low density polyethylene ("LLDPE") comprises, in polymerized form, a majority weight percent of ethylene based on the total weight of the LLDPE. The LLDPE is an ethylene/octene copolymer.

The LLDPE has a density in the range from 0.91 g/cc to 0.93 g/cc. The LLDPE has a melt index (MI) from 0.1 g/10 min to 10 g/10 min, or 0.5g/10 min to 5g/10 min.

LLDPE can be produced with Ziegler-Natta catalysts, or single-site catalysts, such as vanadium catalysts and metallocene catalysts. In an embodiment, the LLDPE is produced with a Ziegler-Natta type catalyst. LLDPE is linear and does not contain long chain branching and is different than low density polyethylene ("LDPE") which is branched or heterogeneously branched polyethylene. LDPE has a relatively large number of long chain branches extending from the main polymer backbone. LDPE can be prepared at high pressure using free radical initiators, and typically has a density from 0.915 g/cc to 0.940 g/cc.

In an embodiment, the LLDPE is a Ziegler-Natta catalyzed ethylene and octene copolymer and has a density from 0.91 g/cc to 0.93 g/cc, or 0.92 g/cc. The LLDPE has a crystallinity from 40% to 50%, or 47%. Nonlimiting examples of Ziegler-Natta catalyzed LLDPE are polymers sold under the tradename DOWLEX, available from The Dow Chemical Company, Midland, Michigan. In a further embodiment, the LLDPE is DOWLEX 2045 S.

In an embodiment, the LLDPE is a single-site catalyzed LLDPE ("sLLDPE"). As used herein, "sLLDPE" is a LLDPE polymerized using a single site catalyst such as a metallocene catalyst or a constrained geometry catalyst. A "metallocene catalyst" is a catalyst composition containing one or more substituted or unsubstituted cyclopentadienyl moiety in combination with a Group 4, 5, or 6 transition metal. Nonlimiting examples of suitable metallocene catalysts are disclosed in U.S. Patent No. 5,324,800. A "constrained geometry catalyst" comprises a metal coordination complex comprising a metal of groups 3-10 or the Lanthanide series of the Periodic Table and a delocalized pi-bonded moiety substituted with a constrain-inducing moiety, said complex having a constrained geometry about the metal atom such that the angle at the metal between the centroid of the delocalized, substituted pi-bonded moiety and the center of at least one remaining substituent is less than such angle in a similar complex containing a similar pi-bonded moiety lacking in such constrain-inducing substituent, and provided further that for such complexes comprising more than one delocalized, substituted pi-bonded moiety, only one thereof for each metal atom of the complex is a cyclic, delocalized, substituted pi-bonded moiety. The constrained geometry catalyst further comprises an activating cocatalyst. Nonlimiting examples of suitable constrained geometry catalysts are disclosed U.S. Pat. No. 5,132,380.

In one embodiment, the sLLDPE has a density of less than 0.940 g/cc or from 0.90 g/cc to 0.94 g/cc. In one embodiment, the sLLDPE has a melt index from 0.5 g/10 min to 3 g/10 min, or from 0.5 g/10 min to 2 g/10 min. The sLLDPE, may be unimodal or multimodal (i.e., bimodal). A "unimodal sLLDPE" is a LLDPE polymer prepared from one single-site catalyst under one set of polymerization conditions. Nonlimiting examples of unimodal sLLDPE include those sold under the trade names EXXACT and EXCEED, available from the ExxonMobil Chemical Company, Houston, Texas; and AFFINITY available from The Dow Chemical Company, Midland, Michigan.

In an embodiment, the sLLDPE is multimodal. A "multimodal sLLDPE is a LLDPE polymer prepared from two or more different catalysts and/or under two or more different polymerization conditions. A "multimodal sLLDPE" comprises at least a lower molecular weight component (LMW) and a higher molecular weight (HMW) component. Each component is prepared with a different catalyst and/or under different polymerization conditions. The prefix "multi" relates to the number of different polymer components present in the polymer. A nonlimiting example of multimodal sLLDPE is set forth in U.S. Patent No. 5,047,468. Further nonlimiting examples of suitable multimodal sLLDPE include those sold under the tradenames ENHANCED POLYETHYLENE and ELITE available from The Dow Chemical Company, Midland, Michigan.

Not wishing to be bound by any particular theory, it is believed that single-site catalyzed LLDPE is homogeneously branched whereas Ziegler-Natta catalyszed LLDPE is heterogeneously branched. With homogeneously branched LLDPE, the comonomer is randomly distributed within a given interpolymer molecule and substantially all of the interpolymer molecules have the same ethylene/comonomer ratio within that interpolymer. On the other hand, heterogeneously branched LLDPE has a distribution of branching, including a branched portion (similar to a very low density polyethylene), and a substantially linear portion (similar to linear homopolymer polyethylene).

For example, a Ziegler-Natta catalyzed LLDPE, such as DOWLEX 2045 (an ethylene/octene copolymer having a melt index ($I_2$) of about 1 g/10 min, a density of about 0.92 g/cm$^3$, a melt flow ratio ($I_{10}/I_2$) of about 7.93 and a molecular weight distribution ($M_w/M_n$) of about 3.34), contains heterogeneous short chain branching equal to the number of carbons of the ethylenically unsaturated comonomer minus two. The comonomer is intermolecularly distributed in a characteristic way, whereby a fraction of the molecules are free of, or otherwise devoid of, comonomer. The comonomer-free fraction is further characterized by having a high molecular weight compared to the branched fraction of the sample. Upon crystallization, the comonomer-free fraction forms large crystals due to the absence of chain defects that interfere with the chain folding process. Large crystals are desirable for barrier properties, as gas molecules (such as oxygen for example) cannot penetrate the large crystals. Thus, at a given crystallinity, a heterogeneous crystal size distribution provides greater gas barrier capability compared to homogeneously branched polyethylene.

Homogeneously branched LLDPE, on the other hand, may or may not have a comonomer-free fraction. Absent a comonomer-free fraction, homogeneously-branched LLDPE exhibits a homogeneous crystal size distribution. When the comonomer-free fraction is present, the molecular weight of the comonomer-free fraction is low compared to the branched fraction, resulting in a small crystal size. Accordingly, crystals in a homogeneously-branched LLDPE are substantially the same size, the crystals being smaller than the crystals found in a heterogeneously branched LLDPE with the same copolymer and copolymer content. The smaller, homogeneously distributed crystals provide less gas bather capability when compared to the larger crystals of the heterogeneously-branched LLDPE. Consequently, heterogeneously-branched LLDPE (i.e., Ziegler-Natta catalyzed LLDPE) has greater gas bather capability when compared to homogeneously-branched LLDPE (i.e., single-site catalyzed LLDPE).

The propylene homopolymer (also referred to as polypropylene) can be isotactic, atactic, or syndiotactic. In one embodiment, the propylene homopolymer is isotactic. The propylene homopolymer has a density from 0.88 g/cc to 0.92 g/cc, or 0.90 g/cc. The propylene homopolymer has a melt flow rate (MFR) from 1.0 g/10 min to 2.1 g/10 min. The propylene homopolymer has a crystallinity from 40% to 60%, or 50%.

In an embodiment, the propylene homopolymer is isotactic and has a density from 0.88 g/cc to 0.92 g/cc, or 0.90 g/cc, a melt flow rate from 1.0 g/10 min to 2.1 g/10 min, and a crystallinity from about 40% to 60%, or 49%.

In an embodiment, the propylene-based polymer is a propylene/a-olefin interpolymer alone or in combination with the propylene homopolymer, the propylene/ethylene interpolymer, and/or the HDPE. The propylene/a-olefin interpolymer comprises, in polymerized form, a majority weight percent propylene based on the weight of the interpolymer, and at least one $\alpha$-olefin, or at least one $C_4$-$C_{20}$ $\alpha$-olefin, or at least one $C_4$-$C_8$ $\alpha$-olefin. In one embodiment, the propylene/a-olefin interpolymer is a random interpolymer. In another embodiment, the propylene/a-olefin interpolymer is a block interpolymer. In one embodiment, the propylene/$\alpha$-olefin interpolymer has a density from 0.85 g/cc to 0.95 g/cc, or 0.90 g/cc. In one embodiment, the propylene/$\alpha$-olefin interpolymer has a MFR from 0.1g/10 min to 10g/10 min, or from 0.5g/10 min to 5.0g/10 min. In one embodiment, the propylene/a-olefin interpolymer has a crystallinity from 20% to 40%, or about 30%. The propylene/a-olefin interpolymer can be formed using single site catalysts (metallocene or constrained geometry), Ziegler-Natta catalysts, or non-metallocene, metal-centered, heterodryl ligand catalysts. Suitable comonomers for polymerizing with propylene include, but are not limited to, 1-butene, 1-pentene, 1-hexene, 1-heptene, 1-octene, 1-nonene, 1-decene, 1-undecene, 1-dodecene, as well as 4-methyl-1-pentene, 4-methyl-1-hexene, 5-methyl-1-hexene, and vinylcyclohexane.

In one embodiment, the $\alpha$-olefin of the propylene/a-olefin interpolymer is selected from 1-butene, 1-hexene, or 1-octene. In an embodiment, the propylene/a-olefin interpolymer has a density from 0.85 g/cc to 0.95 g/cc, or 0.90 g/cc, a melt flow rate from 0.1 g/10 min to 10 g/10 min, and a crystallinity from 20% to 40%, or 30%.

Other nonlimiting examples of suitable propylene/a-olefin interpolymers include propylene/1-butene, propylene/1-hexene, propylene/4-methyl-1-pentene, propylene/1-octene, propylene/ethylene/1-butene, propylene/ethylene/ENB, propylene/ethylene/1-hexene, propylene/ethylene/1-octene, propylene/styrene, and propylene/ethylene/styrene.

In an embodiment, the propylene/a-olefin interpolymer contains greater than 50 mole percent (based on total moles of polymerizable monomers) polymerized propylene.

The propylene/ethylene copolymer comprises, in polymerized form, a majority weight percent propylene based on the weight of the copolymer and ethylene. In one embodiment, the propylene/ethylene copolymer is a random copolymer. In another embodiment, the propylene/ethylene copolymer is a block copolymer. The propylene/ethylene copolymer has a density from 0.85 g/cc to 0.95 g/cc, or 0.90 g/cc. The propylene/ethylene copolymer has a MFR from 0.1 g/10 min to 2 g/10 min. The propylene/ethylene copolymer has a crystallinity from 20% to 40%, or 30%. The propylene/ethylene copolymer can be formed using single site catalysts (metallocene or constrained geometry), Ziegler-Natta catalysts, or non-metallocene, metal-centered, heteroaryl ligand catalysts. In an embodiment, the propylene/ethylene copolymer is a Ziegler-Natta catalyzed copolymer. In one embodiment, the propylene/ethylene copolymer contains less than 20 wt % ethylene comonomer, or from 0.1 wt % to 20 wt %, or 1 wt % to 10 wt %, or from 2 wt % to 5 wt % ethylene comonomer, based on the total weight of the copolymer.

The propylene/ethylene copolymer has a density from 0.85 g/cc to 0.95 g/cc, or of 0.90 g/cc, a melt flow rate from 0.1 g/10 min to 10 g/10 min, or 2.0 g/10 min, and a crystallinity from 20% to 40%, or 30 %.

The HDPE is an ethylene butene copolymer . The HDPE has a density from 0.940 g/cc to 0.970 g/cc, or from 0.950 g/cc to 0.960 g/cc, or 0.956 g/cc. The HDPE has a melt index from 0.1 g/10 min to 10 g/ 10 min or from 0.5 g/10 min to 5 g/10 min. The comonomer(s) can be linear or branched. The HDPE can be prepared with either Ziegler-Natta, chromium-based, constrained geometry or metallocene catalysts in slurry reactors, gas phase reactors or solution reactors. In an embodiment, the HDPE has a crystallinity from 40% to 60%, or 50%.

In an embodiment, the HDPE is an ethylene/butene copolymer with a density from 0.95 g/cc to 0.96 g/cc, a melt index from 1.5 g/10 min to 2.5 g/10 min, and a crystallinity from 48% to 54% or 52%.

The HDPE may comprise two or more of the foregoing embodiments.

In an embodiment, a multilayer film is provided. The multilayer film may include 2, 3, 4, 5, 6, 7 or more layers. The individual layers of the multilayer film may be the same or different.

In an embodiment, the multilayer film includes an inner layer, a first outer layer and a second outer layer. The inner layer is located between the first outer layer and the second outer layer. In another embodiment, the inner layer is adjacent to the first outer layer on one surface, and the second outer layer on the opposite surface, in an "outer/inner/outer" layer configuration. The thickness of one (or each) of the outer layer(s) is greater than the thickness of the inner layer.

In one embodiment, the thickness of the inner layer, the first outer layer and the second outer layer may be the same or different. In one embodiment, the thickness of the first outer layer and the second outer layer can be the same or different.

In an embodiment, the thickness of one (or both) of the outer layer(s) can be at least two times, or four times greater than the thickness of the inner layer. In a further embodiment, the thickness of the first outer layer and the second outer layer may be the same or different.

In an embodiment, the combined thickness of the first outer layer and the second outer layer is from 70% to 99.5% the total thickness of the multilayer film. In one embodiment, the thickness of the inner layer is less than or equal to 30%, or from 0.5% to less than, or equal to 20%, the total thickness of the multilayer film.

In an embodiment, the first outer layer has the same thickness as the second outer layer.

In one embodiment, one (or both) outer layer(s) has a thickness that is greater than the thickness of the inner layer.

In an embodiment, the thickness for each of the outer layers is from 35% to 49.75% the total thickness of the multilayer film, and the thickness of the inner layer is from 30% to 0.5% the total thickness of the multilayer film. In one embodiment, the multilayer film has a layer thickness distribution (percent) of 45/10/45 (outer/inner/outer) based on the total multilayer film thickness. In another embodiment, the multilayer film has a layer thickness distribution of 40/20/40, based on the total multilayer film thickness.

In an embodiment, the inner layer has a thickness that is less than, or equal to 20%, or from 0.5% to 20% the total thickness of the multilayer film. In a further embodiment, the first and second outer layers have the same thickness.

The multilayer film can be stretched or un-stretched. In one embodiment, the multilayer film has a thickness from 1 $\mu$m to 100 $\mu$m or from 20 $\mu$m to 90 $\mu$m, or from 30 $\mu$m to 80 $\mu$m.

In an embodiment, the multilayer film is an un-stretched film and has a thickness about 1 $\mu$m (micron) to 100 $\mu$m (microns), or from 10 $\mu$m (microns) to 50 $\mu$m (microns), or from 20 $\mu$m (microns) to 40 $\mu$m (microns), or about 25 $\mu$m (microns).

In an embodiment, the multilayer film is a stretched film and has a thickness from 1 $\mu$m (micron) to 100 $\mu$m (microns), or from 5 $\mu$m (microns) to 50 $\mu$m (microns), or from 10 $\mu$m (microns) to 30 $\mu$m (microns), or 25 $\mu$m (microns). The film is stretched from 1% to 200%, or from 10% to 100% the length of the pre-stretched film.

The multilayer film has an oxygen transmission rate (OTR) less than 10,800 cc/gm2/24hr as measured in accordance with ASTM D 3985-05. In an embodiment, the OTR is from about 4000 cc/m2/24hr to about 10,000 cc/m2/24hr, or from about 5,000 cc/m2/24hr to about 9,000 cc/m2/24hr, or from about 6,000 cc/m2/24hr to about 8,000 cc/m2/24hr.

The inner layer consists of a component selected from the group consisting of a high density polyethylene (HDPE), a propylene homopolymer and a propylene/ethylene copolymer. The HDPE, the propylene homopolymer and propylene/ethylene copolymer may include any respective HDPE, propylene homopolymer, or propylene/ethylene copolymer as previously disclosed above for each component. In an embodiment, the inner layer is a single component. For example, the inner layer is composed of only one of HDPE, propylene homopolymer or propylene/ethylene copolymer.

The multilayer film also includes the first outer layer and the second outer layer. The composition and/or the thickness of the first outer layer and the second outer layer may be the same or different. In one embodiment, the first outer layer and the second outer layer consists of LLDPE. The LLDPE may be any respective polymer as previously disclosed above. The LLDPE can be a sLLDPE as disclosed above.

The first outer layer is composed of a single component and the second outer layer is composed of a single component. The single component in each outer layer may be the same or different.

Each layer is a single component. Thus, each outer layer is composed of only one of the following: LLDPE. The inner layer is composed of only one of the following: the high density polyethylene (HDPE), the propylene homopolymer, or the propylene/ethylene copolymer.

In an embodiment, the inner layer directly contacts at least one of the outer layers. As used herein, "contact" is the act or the condition of touching, interfacing, and/or meeting. Thus, when one layer is in "direct contact with" or "directly contacts" another (or other) layer, the one layer is immediately adjacent to, and touches, interfaces, and/or meets the other layer such that no intervening layer(s) and/or no intervening structure(s) is present between the one layer and the other layer.

In a further embodiment, the inner layer is coextensive, or substantially coextensive, with the first outer layer and the second outer layer and the inner layer directly contacts the first outer layer and the inner layer directly contacts the second outer layer. Thus, the multilayer film includes no tie layer (or intervening layer) between the first outer layer and the inner layer and/or no tie layer (or intervening layer) between the second outer layer and the inner layer.

In an embodiment, at least one outer layer is an outermost layer. As used herein, "an outermost layer" is a layer most distant from the inner layer. An outermost layer is often referred to as a skin layer or a surface layer. In another embodiment, the at least one outermost layer is in direct contact with the inner layer.

In an embodiment, both the first outer layer and the second outer layer are outermost layers. In another embodiment, the first outermost layer and the second outermost layer are in direct contact with the inner layer.

The multilayer film may be a laminated film or a coextruded film. In an embodiment, the multilayer film is a coextruded film whereby at least one of the outer layers is coextruded to the inner layer. In a further embodiment, the first outer layer is coextruded to the inner layer and the second outer layer is coextruded to the inner layer. In yet a further embodiment, the first and second outer layers are outermost layers coextruded to the inner layer.

In an embodiment, the inner layer is an HDPE and both, outer layer(s) is an LLDPE. The HDPE/LLDPE can be any HDPE/LLDPE as disclosed herein. The LLDPE can be any LLDPE or a sLLDPE as disclosed herein. In a further embodiment, the HDPE has a density of about 0.956 g/cc, a melt index of about 2.0 g/ 10 min, and a crystallinity of about 52 %. The LLDPE has a density of about 0.92 g/cc, a melt index of about 1.0 g/10 min, and a crystallinity of about 47%. In a further embodiment, The LLDPE/HDPE/LLDPE layer structure provides the multilayer film with an OTR from 5,000 cc/$\mu$m$^2$/24hr to 7,000 cc/$\mu$m$^2$/24hr.

In an embodiment, the inner layer is a propylene homopolymer and both, outer layer(s) is an LLDPE or a sLLDPE. The propylene homopolymer can be any propylene homopolymer as disclosed herein. The LLDPE can be any LLDPE as disclosed herein. In an embodiment, the propylene homopolymer has a density of about 0.90 g/cc and a melt flow rate of about 2.1 g/10 min, and a crystallinity of about 49%. The LLDPE/PP/LLDPE layer structure provides the multilayer film with an OTR from 6,000 cc/$\mu$m$^2$/24hr to 8,000 cc/$\mu$m$^2$/24hr.

In an embodiment, the inner layer is a high density polyethylene that is an ethylene/butene copolymer having a density from 0.940 g/cc to 0.970 g/cc, or 0.956 g/cc, a melt index from 0.1 g/10 min to 10 g/10 min, or 2.0 g/ 10 min, and a crystallinity from 40% to 60%, or 52 %. Each outer layer is a linear low density polyethylene that is an ethylene/octene copolymer having a density from 0.91 g/cc to 0.93 g/c, or 0.92 g/cc, a melt index from 0.1 g/10 min to 10 g/10min, or 1.0 g/10 min, and a crystallinity from 40% to 50% or 47%.

In an embodiment, the inner layer is a propylene homopolymer having a density from 0.88 g/cc to 0.92 g/cc, or 0.90 g/cc, a melt flow rate from 1.0 g/10 min to 10 g/10 min, or 2.1 g/10 min, and a crystallinity from 40% to 60%, or 49%. Each outer layer is a linear low density polyethylene that is an ethylene/octene copolymer having a density from a 0.91 g/cc to 0.93 g/cc, or 0.92 g/cc, a melt index from 0.1 g/10 min to 10 g/10min, or 1.0 g/10 min, and a crystallinity from 40% to 50% or 47%.

In an embodiment, the inner layer is a propylene/ethylene copolymer having a density from 0.85 g/cc to 0.95 g/cc, or of 0.90 g/cc, a melt flow rate from 0.1 g/10 min to 10 g/10 min, or 2.0 g/10 min, and a crystallinity from 20% to 40%, or 30%. Each outer layer is a linear low density polyethylene that is an ethylene/octene copolymer having a density from 0.91 g/cc to 0.93 g/cc, or 0.92 g/cc, a melt index from 0.1 g/10 min to 10 g/10min, or 1.0 g/10 min, and a crystallinity from 40% to 50% or 47%.

In an embodiment, the multilayer film has a dart drop impact strength from about from 100 g to 300 g, or from 140 g to 210 g.

In an embodiment, the multilayer film has puncture force from 5 N to 25 N, or from 6 N to 20 N.

In an embodiment, the multilayer film has an Elmendorf tear value (CD) from 500 g to 700 g, or from 550 g to 680 g. In another embodiment, the multilayer film has an Elmendorf tear value (MD) from 200 g to 400 g, or from 250 g to 350 g.

In an embodiment, one (or both) outer layer(s) can be a blend. For example, one (or both) outer layer(s) can be any blend disclosed herein for the monolayer film. In an embodiment, one (or both) outer layer(s) contain about 90 wt % linear low density polyethylene and about 10 wt % propylene homopolymer. In another embodiment, one (or both) outer layer(s) contain about 90 wt % linear low density polyethylene and about 10 wt % high density polyethylene.

In an embodiment, both outer layers can be a blend. For example, each outer layer can be any blend disclosed herein for the monolayer film. In an embodiment, each outer layer contains about 90 wt % linear low density polyethylene and about 10 wt % propylene homopolymer. In another embodiment, each outer layer contains about 90 wt % linear low density polyethylene and about 10 wt % high density polyethylene.

In an embodiment, a five layer multilayer film is provided. The individual layers may be the same or different. The individual layers may be any composition or blend for any layer previously disclosed herein. The multilayer film may also include seven layers.

In an embodiment, the 5-layer film includes two outermost layers, each outermost layer being LLDPE. The inner layers may be any composition or blend disclosed herein.

In an embodiment, the 5-layer multilayer film has an oxygen transmission rate from 1000 cc/m$^2$/day to 4000 cc/ m$^2$/day, or from 2000 cc/ m$^2$/day to 3000 cc/ m$^2$/day.

The present multilayer film can be made by two or more embodiments as disclosed herein. When the inner and/or outer layers are a blend, the blend may comprise two or more components disclosed herein. The inner layer may comprise two or more embodiments as disclosed herein. The other layer may comprise two or more embodiments as disclosed herein.

Any of the foregoing multilayer films (or individual layers thereof) may comprise one or more additives. Suitable additives include, but are not limited to, adhesion promoters, antioxidants, anti-blocking agents, antistatic agents, light shielding additives (pigments), colorants, dyes, fillers (silica, talc), fire retardants, heat stabilizers, lubricants, nucleating agents, processing aids, release agents, slip agents, smoke inhibitors, thermal stabilizers, UV light-stabilizers, viscosity control agents, waxes, and any combination thereof.

In an embodiment, the multilayer film of the present disclosure is a cling film. As used herein, a "cling film" is a film that adheres to itself, particularly when the film is overwrapped or overlapped upon itself or otherwise contacts itself. In another embodiment, any of the present films can be a stretch film.

It has been surprisingly discovered that the present multilayer films provide improved gas barrier (oxygen, nitrogen, carbon dioxide) and/or water barrier properties in combination with desirable impact, puncture, and tear resistance properties. The present films advantageously provide improved barrier properties compared to conventional films of similar thickness. The multiple layer film can be produced by way of such nonlimiting techniques as blown film (co-)extrusion, bubble (co-)extrusion, cast (co-)extrusion or wrapping film (co-)extrusion and lamination. In the case of the multilayer film, one or both or the outer layers can be coextruded to the inner layer. Any production process can include stretching the formed film in one direction (machine or cross), or two directions (machine and cross).

In an embodiment, the multilayer film is a blown film. As used herein, a "blown film" is a film produced by extruding (or coextruding) a polymer melt(s) from an annular die into a tube which is simultaneously pulled away from the die, and over a bubble of air trapped between the die and a collapsing device, such as one or more nip rolls, while the air is blown around the outer film tube surface to stabilize and quench the tube.

In the blown film process, contact of the outer film surface and optionally also the inner film tube surface with room temperature or cooler air cools the radially expanding tubular polymer melt as it leaves the die and travels over the trapped bubble thereby causing it to solidify. The point of transition from polymer melt to solid is commonly known as the frost line. Above the frost line, the blown or inflated tube is collapsed and fed through nip rolls which trap air within the tube to maintain an expanded bubble of fluid (typically air). Optionally, this air bubble may be used to internally cool the expanded film tube by continuously delivering cool air (*e.g.,* at 7-13°C(45-55°F)) while simultaneously removing warm air from inside the bubble via the die. This exchange of air is usually performed at a constant rate to produce a final blown film of uniform size. The internal bubble cooling assists in quenching the film and may also produce a film having improved optical properties (*i.e.,* lower haze and higher gloss). The blow up ratio is the ratio of the film circumference after radial expansion and cooling to the die opening circumference and may be determined from the known annular die opening dimensions and by measuring the transverse width of the flattened, expanded and cooled tubular film. Typical blow up ratios range from 2:1 to 5:1. Dimensions and properties of the blown film may be adjusted by altering the blow up ratio and/or the haul off (or draw) speed of the film as it is pulled out of the die in the machine direction, for example, by driven nip rolls.

The multilayer film can be subjected to post-processing techniques. Nonlimiting examples of post processing techniques include radiation treatment, corona treatment, silane cure, and/or polymer grafting. Sealing techniques to which the multi-layer film can be exposed include heat sealing, adhesive sealing, heat bar sealing, impulse heating, side welding, and/or ultrasonic welding.

In an embodiment, the multilayer film can be stretched. The stretching can be in a single direction (machine or cross) or two directions (machine and cross). The multi-layer film can be stretched from 1% to 200% the length of the pre-stretched film, or from 10% to 100% the length of the pre-stretched film. In another embodiment, the multi-layer film is a 100% machine-direction stretched film.

In the production of the multilayer films of this disclosure, it has been surprisingly discovered that the gradual, incremental, and measured cooling of the extrudate advantageously increases the crystallinity of the one or more layers of the multilayer film. The barrier property of the film layer increases as the crystallinity increases.

In an embodiment, a method for producing bale silage is provided. The method includes wrapping a wrapping film around a bale of a forage crop and forming a barrier around the bale. As used herein, a "wrapping film" is any multilayer film disclosed herein. The wrapping film is wrapped around the bale to produce a barrier that is composed of one, two, three, four, or more layers of the wrapping film. As used herein, a "barrier" is an airtight covering or an airtight encasement that reduces the permeation of oxygen. Thus, the barrier can be a single layer of the wrapping film or multiple layers of the wrapping film. The method further includes preventing, with the barrier, less than 10,800 cc/m$^2$/24hr

of oxygen to contact the bale.

As used herein, "bale silage" is one or more forage crops formed into a bale and covered with a wrapping (typically a polymeric film) to exclude oxygen. A "forage crop" is any plant that is grown and fed to livestock. Nonlimiting examples of forage crops suitable for bale silage include beans, clover, corns, cornstalk, grasses, grains (barley, oats, rice, wheat, rye, millet), hay, legumes (alfalfa, red clover, white clover, alsike clover, birdsfoot trefoil, vetches, sweetclover), sorghums, soybeans, vegetables, and any combination of the foregoing.

The bale can be wrapped as is known in the art. In an embodiment, a bale wrapping device wraps the wrapping film around the bale to form the barrier. A bale wrapping device typically includes a loading arm that lifts the bale and places it on a wrapping table. The wrapping table includes rollers and belts which rotate the bale while the table itself revolves. A dispensing device provides one or more rolls of the wrapping film. As the bale turns, the wrapping film is typically stretched as it is pulled through the dispensing device and wrapped tightly around the bale to remove oxygen from the bale. When the table has revolved a predetermined number of times, a lift device tilts the wrapping table to tip the wrapped bale off of the wrapping table. The dispensing device cuts the wrapping film prior to the wrapped bale falling from the wrapping table. Operation of the bale wrapping device can be controlled automatically (by way of a computer or similar logic) or manually. Conventional bale wrapping procedures typically wrap the bale with about four to about six layers of the wrapping film to produce bale silage.

Once wrapped, the forage crop undergoes an ensiling process whereby anaerobic microorganisms ferment carbohydrates present in the forage crop to lactic acid forming silage. This fermentation process inhibits the growth of other detrimental microorganisms. Bale silage typically has a moisture content from 40 wt % to 60 wt %.

Damage to the barrier covering, surrounding, or otherwise encasing the bale silage is disfavored. Holes or tears in the barrier, for example, allow oxygen to enter the bale silage. Oxygen in the bale silage leads to aerobic deterioration of the silage resulting in spoilage. The present multilayer films advantageously prevent aerobic deterioration of bale silage with the provision of improved barrier properties and improved impact, tear, and puncture resistance. The present films further exhibit suitable cling properties to maintain the airtight barrier intact for extended periods - from about one day to about one year, or longer.

In an embodiment, the bale silage production method includes wrapping the wrapping film around the bale and forming an airtight barrier with from about two layers to about six layers, or two layers to about four layers of the wrapping film. In another embodiment, the bale silage production method includes forming the airtight barrier with two wrapping film layers to less than or equal to four wrapping film layers. The improved oxygen barrier capability of the present films enables the airtight barrier to be formed with fewer layers of the wrapping film while providing the same, or better, oxygen resistance to the bale when compared to conventional bale silage films. In a further embodiment, the wrapping film is stretched as it is wrapped around the bale.

The present films have improved oxygen barrier properties compared to conventional silage films. In an embodiment, the bale silage production method includes wrapping the bale with any of the present films and forming the airtight barrier (with an OTR of less than 10,800, $cc/m^2/24hr$) with from 1 wt % to 40 wt %, or from 5 wt % to 30 wt %, or from 10 wt % to 20 wt % less film based on the weight of an airtight barrier formed by way of a conventional bale silage wrapping procedure using a film composed of LLDPE. In another embodiment, the bale silage production method includes wrapping the bale with any of the present films and forming the airtight barrier (with an OTR of less than 10,800 $cc/m^2/24hr$) having a weight that is from 1% to 40%, or from 5% to 30%, or from 10 wt % to 20 wt % less than the weight of an airtight barrier composed of DOWLEX 2045 film and formed by way of a conventional bale wrapping procedure.

Another advantage of the present films is the ability to prevent aerobic deterioration of the bale silage (1) with a thinner wrapping film than conventional and/or (2) with fewer wrapping film overwraps of the bale. Thus, the present films require less wrapping film while providing the same or greater oxygen barrier protection to the bale.

In an embodiment, the bale silage production method includes stretching the film. The stretching can occur before or during the wrapping. The film can be stretched from 1% to 200% the length of the pre-stretched film, or from 10% to 100% the length of the pre-stretched film.

In an embodiment, the barrier has a thickness from 1 $\mu$m to 100 $\mu$m, or from 2 $\mu$m to 50 $\mu$m, or from 5 $\mu$m to 30 $\mu$m.

The present films advantageously provide a barrier layer for bale silage that requires less film material to prevent aerobic deterioration of the silage compared to conventional bale silage films.

In an embodiment, a method for packaging an air sensitive item is provided. The method includes wrapping a wrapping film around the air sensitive item and forming a barrier around the air sensitive item. The wrapping film is wrapped around the air sensitive item to produce a barrier that is composed of one, two, three, four, or more layers of the wrapping film. The method further includes preventing, with the barrier, less than 10,800 $cc/m^2/24hr$ of oxygen to contact the air sensitive item.

As used herein, an "air sensitive item" is an item that degrades with exposure to air. Nonlimiting examples of air sensitive items include foodstuffs, household goods, chemicals, and pharmaceuticals. The wrapping film may be wrapped onto the air sensitive item to form the barrier directly around or directly about the air sensitive item.

In an embodiment, the air sensitive item is provided in a container. Nonlimiting examples of containers include bottles, boxes, cans, cartons, crates, drums, and vials. The container is subsequently wrapped with the wrapping film. The method includes preventing, with the barrier, less than 10,800 cc/m$^2$/24hr of oxygen to contact the container.

DEFINITIONS

All references to the Periodic Table of the Elements herein shall refer to the Periodic Table of the Elements, published and copyrighted by CRC Press, Inc., 2003. Also, any references to a Group or Groups shall be to the Groups or Groups reflected in this Periodic Table of the Elements using the IUPAC system for numbering groups. Unless stated to the contrary, implicit from the context, or customary in the art, all parts and percents are based on weight.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. In contrast, the term, "consisting essentially of' excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

Any numerical range recited herein, include all values from the lower value to the upper value, in increments of one unit, provided that there is a separation of at least 2 units between any lower value and any higher value. As an example, if it is stated that the amount of a component, or a value of a compositional or physical property, such as, for example, amount of a blend component, softening temperature, melt index, etc., is between 1 and 100, it is intended that all individual values, such as, 1, 2, 3, etc., and all subranges, such as, 1 to 20, 55 to 70, 197 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. In other words, any numerical range recited herein includes any value or subrange within the stated range. Numerical ranges have been recited, as discussed herein, in reference to film thickness, melt index, melt flow rate, percent crystallinity, density, and other properties.

The term "multilayered film," as used herein, refers to a film structure with more than one layer or ply.

The term "film," as used herein, refers to a film structure with at least one layer or ply.

The term "inner layer," as used herein, refers to an interior film layer that is co-contiguous with another layer on each surface.

The term "composition," as used herein, includes a mixture of materials which comprise the composition, as well as reaction products and decomposition products formed from the materials of the composition.

The term "polymer" is a macromolecular compound prepared by polymerizing monomers of the same or different type. "Polymer" includes homopolymers, copolymers, terpolymers, interpolymers, and so on. The term "interpolymer" means a polymer prepared by the polymerization of at least two types of monomers or comonomers. It includes, but is not limited to, copolymers (which refer to polymers prepared from two different types of monomers), terpolymers (which refers to polymers prepared from three different types of monomers), tetrapolymers (which refers to polymers prepared from four different types of monomers), and the like.

The term "olefin-based polymer" as used herein, refers to a polymer that comprises, in polymerized form, a majority weight percent of olefin (such as ethylene or propylene) and optionally one or more other comonomers.

The term "interpolymer," as used herein, refers to polymers prepared by the polymerization of at least two different types of monomers. The generic term interpolymer thus includes copolymers, employed to refer to polymers prepared from two different types of monomers, and polymers prepared from more than two different types of monomers.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term, "ethylene-based polymer," as used herein, refers to a polymer that comprises, in polymerized form, a majority weight percent of ethylene, based on the weight of the polymer.

The term, "ethylene-based interpolymer," as used herein, refers to a polymer that comprises in polymerized form, a majority weight percent of ethylene, based on the total weight of the interpolymer, and at least one comonomer.

The term, "ethylene/$\alpha$-olefin interpolymer," as used herein, refers to a polymer that comprises, in polymerized form, a majority weight percent of ethylene, based on the total weight of the interpolymer, an $\alpha$-olefin comonomer, and optionally, one or more other comonomers.

The term, "propylene-based polymer," as used herein, refers to a polymer that comprises, in polymerized form, a majority weight percent of propylene, based on the total weight of the polymer more than 50 mole percent polymerized propylene monomer, based on the total amount of polymerizable monomer(s).

The term, "propylene-based interpolymer," as used herein, refers to a polymer that comprises, in polymerized form, a majority weight percent of propylene, based on the total weight of the interpolymer and at least one comonomer.

The term, "propylene/$\alpha$-olefin interpolymer," as used herein, refers to a polymer that comprises, in polymerized form, a majority weight percent of propylene, based on the total weight of the interpolymer, an $\alpha$-olefin comonomer, and optionally, one or more other comonomers.

The term, "propylene/ethylene interpolymer," as used herein, refers to a polymer that comprises, in polymerized form, a majority weight percent of propylene, based on the total weight of the interpolymer, ethylene comonomer, and optionally, one or more other comonomers.

TEST PROCEDURES

The specific test parameters within each test will depend on the polymer or polymer blend used. Some of the tests below describe test parameters that are indicated as representative of olefin-based resins. The particular parameters of a test are not intended to limit the scope of this disclosure. Those skilled in the art will understand the limitations of a particular set of test parameters, and will be able to determine appropriate parameters for other types of polymers and blends.

The average molecular weights and molecular weight distributions for ethylene-base polymers can be determined with a chromatographic system consisting of either a Polymer Laboratories Model PL-210 or a Polymer Laboratories Model PL-220. The column and carousel compartments are operated at 140°C for ethylene-based polymers. The columns are three Polymer Laboratories "10 $\mu$m (micron) Mixed-B" columns. The solvent is 1,2,4 trichlorobenzene. The samples are prepared at a concentration of 0.1 gram of polymer powder in 50 milliliters of solvent. The solvent used to prepare the samples contains 200 ppm of butylated hydroxytoluene (BHT). Samples are prepared by agitating lightly for 2 hours at 160°C. The injection volume is 100 microliters and the flow rate is 1.0 milliliters/minute. Calibration of the GPC column set is performed with narrow molecular weight distribution polystyrene standards, purchased from Polymer Laboratories (UK). The polystyrene standard peak molecular weights are converted to polyethylene molecular weights using the following equation (as described in Williams and Ward, J. Polym. Sci., Polym. Let., 6, 621 (1968)).

$$M_{polyethylene} = A \text{ x } (M_{polystyrene})^B ,$$

where M is the molecular weight, A has a value of 0.4315 and B is equal to 1.0.

Equivalent molecular weight calculations for the ethylene-based polymers are performed using Viscotek TriSEC software Version 3.0. The molecular weights for propylene-based polymers can be determined using Mark-Houwink ratios according to ASTM D6474.9714-1, where, for polystyrene, a = 0.702 and log K = -3.9, and for propylene-based polymers, a = 0.725 and log K = -3.721. For propylene-based samples, the column and carousel compartments are operated at 160°C.

Polydispersity (Mw/Mn): A measure of the uniformity of chain lengths within a polymer sample. It defines the breadth of molecular weight distribution. It is obtained by dividing the weight average molecular weight (Mw) by the number average molecular weight (Mn). The Mw and Mn are determined by Gel Permeation-Liquid Chromatography.

Percent crystallinity for ethylene-based and propylene-based polymers can be determined by differential scanning calorimetry (DSC), using a TA Instruments Model Q1000 Differential Scanning Calorimeter. A sample of about 5-8 mg size is cut from the material to be tested, and placed directly in the DSC pan for analysis. For higher molecular weight materials, a thin film is normally pressed from the sample, but for some lower molecular weight samples, they may be either too sticky or flow too readily during pressing. Samples for testing may, however, be cut from plaques that are prepared, and used, for density testing. The sample is first heated at a rate of about 10°C/min to 180°C for ethylene-based polymers (230°C for propylene-based polymers), and held isothermally for three minutes at that temperature to ensure complete melting (the first heat). Then the sample is cooled at a rate of 10°C per minute to -60°C for ethylene-based polymers (-40°C for propylene-based polymers), and held there isothermally for three minutes, after which, it is again heated (the second heat) at a rate of 10°C per minute until complete melting. The thermogram from this second heat is referred to as the "second heat curve." Thermograms are plotted as watts/gram versus temperature.

The percent crystallinity in the ethylene-based polymers may be calculated using heat of fusion data, generated in the second heat curve (the heat of fusion is normally computed automatically by typical commercial DSC equipment, by integration of the relevant area under the heat curve). The equation for ethylene-based polymers is percent Cryst. = ($H_f \div$ 292 J/g) x 100; and the equation for propylene-based polymers is:

percent Cryst. = ($H_f \div$ 165 J/g) x 100. The "percent Cryst." represents the percent crystallinity and "$H_f$" represents the heat of fusion of the polymer in Joules per gram (J/g).

The melting point(s) ($T_m$) of the polymers can be determined from the second heat curve obtained from DSC, as described above. The crystallization temperature ($T_c$) can be determined from the second cooling curve.

Density is determined in accordance with American Society for Testing and Materials (ASTM) procedure ASTM D792-00, Method B.

Melt flow rate (MFR) in g/10 min for propylene-based polymers is measured using ASTM D-1238-04 condition 230°C/2.16kg.

Melt index (12) in g/10 min for ethylene-based polymers is measured using ASTM D-1238-04, Condition 190°C/2.16kg.

Elmendorf Tear measures the average force required to propagate tearing through a specified length of plastic film on an Elmendorf-type tear tester and is measured in accordance with ASTM D-1922-06 (type-A). Specimens are cut in a constant radius form and have a pre-cut slit. Testing is performed using a knife-tipped pendulum. The average force is calculated from the pendulum energy lost while tearing the test specimen. Tear direction is in the machine direction (MD) and/or the cross direction (CD).

Dart impact strength measures the weight required to cause 50% of tested films to failure by impact from a falling dart and is measured by way of a dart impact tester, in accordance with ISO-7765-1-88: dart drop testing methods-B; method dart head diameter: 50 mm; drop height: 1.5m.

Oxygen transmission rate is measured at 25°C, 75% RH, 1 atm using a MOCON Ox-Tran Model 2/21 analyzer in accordance with ASTM D 3985-05. The test specimen is held such that it separates two sides of a test chamber. One side is exposed to a nitrogen atmosphere while the other side is exposed to an oxygen atmosphere. A coulometric sensor monitoring the exit port of the nitrogen side measures the amount of oxygen present. Testing is complete when the concentration of oxygen in the nitrogen side atmosphere is constant. For a stretched sample, the film is first stretched using an Instron tensile machine. The stretched film is then held on a metallic frame to avoid film relaxation, the film-on-frame subsequently placed in the chamber to measure the oxygen transmission.

Film thickness is measured with a Mitutoyo Digimatic Micrometer.

Tensile Strength: A measure of the force required under constant elongation to break a specimen of the film; measured by ASTM D 882-02. Test specimens should have a width to thickness ratios of at least 8:1. Two sets of specimens are tested for anisotropic materials, the first set parallel to the direction of polymer orientation (MD - machine direction) and the second set perpendicular to the direction of polymer orientation (CD - cross direction).

| Term | Definition |
|---|---|
| Elongation @ Break | Tensile elongation corresponding to the point of rupture. |
| Elongation @ Yield | Tensile elongation corresponding to the point of yield. |
| Tensile Strength @ Break | Tensile stress corresponding to the point of rupture. |
| Tensile Strength @ Yield | Tensile stress corresponding to point of yield. |
| Secant Modulus | Slope of a line drawn from the point of zero strain to a point on the stress strain curve at a specified strain. |
| Film Toughness | Energy per unit volume absorbed by a specimen up to the point of rupture during a tensile test. The area under the stress strain curve. |

Elongation: A measure of the percent extension required to break a specimen of the film; measured by ASTM D 882-02.

Modulus: The ratio of the change in force to the change in elongation in the straight line portion of an Instron Tensile Testing curve; measured by ASTM D 882-02-Method A.

Tear Propagation: The force required to propagate a tear from a tiny slit made by a sharp blade in a specimen of the film; measured by ASTM D-1922-06A.

Puncture Force: The energy necessary to puncture a restrained specimen of film, similar to ball burst, defined above. However, the Instron Tensile Tester has the ability to measure the tensile/elongation curve to break. The "gradient" is the ratio of the change in force to change in elongation in the straight line portion of the curve. "Peak" is a measure of the maximum force exerted on the specimen to impart rupture. "Puncture Energy" is a measure of the energy absorbed by the sample prior to rupture. Puncture Force is measured by ASTM D 5748-95.

By way of example and not limitation, examples of the present disclosure will now be given.

**EP 2 554 377 B1**

EXAMPLES

A. Multilayer Film

TABLE 1A

| Multilayer Film Components | | | | | |
|---|---|---|---|---|---|
|  | Density g/cc | MI/MFR | Polymer | Crystallinity (%) | Type |
| LLDPE | 0.92 | 1.0 MI | ethylene/octene | 46.7 | Ziegler-Natta |
| sLLDPE | 0.92 | 0.85 MI | ethylene/octene |  | Metallocene |
| Polypropylene (PP) | 0.90 | 2.1 MFR | n/a-homo, isotactic | 49.0 | Ziegler-Natta |
| Propylene copolymer (PE) | 0.90 | 2.0 MFR | propylene/ethylene | 30.4 | Ziegler-Natta |
| HDPE | 0.956 | 1.0 MI | ethylene/butene | 52.3 | Ziegler-Natta |

Samples are fabricated on a Collin (type 180/400) blown film line. Three extruders are used to produce the three layer structures. The extruder specifications are summarized in the table below.

TABLE 2

| Extruder specifications and layer layout | | | |
|---|---|---|---|
| Extruder | A | B | C |
| Layer | Outer | Inner | Outer |
| Screw length (mm) | 625 | 750 | 625 |
| Screw diameter (mm) | 25 | 30 | 25 |

The melt streams are joined to a multilayer composition using a spiral mandrel distributor (model RWT 40) having a diameter of 60mm and a die gap of 1.2mm. The formed multilayer tube is cooled using a Dual lip air ring. The extrusion temperatures are set accordingly to obtain a melt temperature of about 220°C for the outer layers and about 230°C for the inner layer.

All of the films are produced using the following constant parameters: total output= 5 kg/h; blow-up ratio (BUR)=2.5; die gap=1.2; froze line height (FLH) ≈100-150mm; air temperature at cooling ring 20°C; and a film thickness of either 25 μm (microns) or 50 μm (microns).

TABLE 3A

| Multilayer Films-Un-stretched | | | | | | | | | |
|---|---|---|---|---|---|---|---|---|---|
| Example # | Structure | % Layer config[2] | Thickness[3] (μm) | Density (g/cc) | OTR cc/m2/day | DI (g) | Punc. Force (N) | CD Tear (g) | MD Tear (g) |
| Control | LLDPE | 100 | 22.2 | 0.92 | 10866.3 | 162 | 13 | 558 | 289 |
| 10 | LLDPE/PP/ LLDPE | 45/10/45 | 26.8 | 0.918 | 7168.9 | 183 | 12 | 663 | 267 |
| 11 | LLDPE/PE/ LLDPE | 45/10/45 | 28.9 | 0.918 | 7176.7 | 202 | 17 | 674 | 252 |
| 12 | LLDPE/ HDPE/ LLDPE | 45/10/45 | 26.0 | 0.9235 | 6504.6 | 157 | 10 | 584 | 259 |

(continued)

| Multilayer Films-Un-stretched | | | | | | | | | |
|---|---|---|---|---|---|---|---|---|---|
| Example # | Structure | % Layer config[2] | Thickness[3] ($\mu$m) | Density (g/cc) | OTR cc/m2/day | DI (g) | Punc. Force (N) | CD Tear (g) | MD Tear (g) |
| 13 | LLDPE/ HDPE/ LLDPE | 40/20/40 | 28.5 | 0.9272 | 5831.9 | 146 | 6 | 573 | 238 |
| 14* | LLDPE/ LLDPE/ HDPE | 45/45/10 | 27.8 | 0.9235 | 7017.7 | 182 | 1 | 645 | 347 |
| [2] Layer configuration based on total film thickness [3] Thickness based on the total thickness of final multilayer film OTR = oxygen transmission rate DI = dart impact | | | | | | | | | |

TABLE 3B

| Multilayer Films-100% stretched | | | | |
|---|---|---|---|---|
| Example # | Structure | % Layer config[2] | Thickness[3] ($\mu$m) | OTR cc/m2/day |
| Control | LLDPE | 100 | 17 | 9927 |
| 10 | LLDPE/PP/LLDPE | 45/10/45 | 23 | 7046 |
| 11 | LLDPE/PE/LLDPE | 45/10/45 | 23 | 6970 |
| 12 | LLDPE/HDPE/LLDPE | 45/10/45 | 20 | 5842 |
| 13 | LLDPE/HDPE/LLDPE | 40/20/40 | 20 | 5162 |
| 14* | LLDPE/LLDPE/HDPE | 45/45/10 | 22 | 6176 |
| [2] Layer configuration based on total film thickness [3] Thickness based on the total thickness of final multilayer film OTR = oxygen transmission rate | | | | |

TABLE 3C

| Multilayer Films Un-stretched | | | | | | | |
|---|---|---|---|---|---|---|---|
| Example # | Structure | % Layer config[2] | Thickness[3] ($\mu$m) | OTR cc/m2/day | DI (g) | CD Tear (g) | MD Tear (g) |
| 15 | LLDPE/PP/LLDPE/PP/ LLDPE | 30/10/20/10/30 | 50 | 2722 | 339 | 775 | 484 |
| 16 | LLDPE/PP/LLDPE/PP/ LLDPE | 15/1050/10/15 | 50 | 2692 | 339 | 967 | 404 |
| 17 | LLDPE/PP/LLDPE/PP/ LLDPE | 25/5/40/5/25 | 50 | 3059 | 514 | 1200 | 729 |
| [2] Layer configuration based on total film thickness [3] Thickness based on the total thickness of final multilayer film OTR - oxygen transmission rate DI - dart impact * Comparative Example | | | | | | | |

**EP 2 554 377 B1**

The present films have improved oxygen barrier properties particularly when compared to conventional silo and clamp storage systems. The present films demonstrate mechanical properties that are at least as good as (or better than) conventional silage films. The present films advantageously reduce the amount of film material required for bale silage wrapping - reducing costs and improving production efficiency.

**Claims**

1. A multilayer film comprising:

an inner layer located between a first outer layer and a second outer layer, the inner layer consisting of a component selected from the group consisting of (a) a high density polyethylene that is an ethylene/butene copolymer having a density from 0.940 g/cc to 0.970 g/cc as measured using ASTM D792-00, Method B, a melt index from 0.1 g/10 min to 10 g/10 min as measured using ASTM D-1238-04, condition 190°C/2.16 kg and a crystallinity from 40% to 60%, (b) a propylene homopolymer having a density from 0.88 g/cc to 0.92 g/cc as measured using ASTM D792-00, Method B, a melt flow rate from 1.0 g/10 min to 2.1 g/10 min as measured using ASTM D-1238-04, condition 230°C/2.16 kg, and a crystallinity from 40% to 60% and (c) a propylene/ethylene copolymer having a density from 0.85 g/cc to 0.95 g/cc as measured using ASTM D792-00, Method B, a melt flow rate from 0.1 g/10 min to 2.0 g/10 min as measured using ASTM D-1238-04, condition 230°C/2.16 kg, and a crystallinity from 20% to 40%;
the first outer layer and the second outer layer being the same or different, each outer layer consisting of a linear low density polyethylene that is an ethylene/octene copolymer having a density from 0.91 g/cc to 0.93 g/cc as measured using ASTM D792-00, Method B, a melt index from 0.1 g/10 min to 10 g/10 min as measured using ASTM D-1238-04, condition 190°C/2.16 kg, and a crystallinity from 40% to 50%, wherein a thickness of at least one outer layer is greater than the thickness of the inner layer, the multilayer film having a thickness from 1 μm (micron) to 100 μm (microns), the multilayer film having an oxygen transmission rate less than 10,800 cc/m$^2$/24hr as measured in accordance with ASTM D 3985-05.

2. The multilayer film of claim 1, wherein the thickness of each outer layer is greater than the thickness of the inner layer.

3. The multilayer film of any of claims 1-2, wherein the inner layer has a thickness less than or equal to 20% the total thickness of the film.

4. The multilayer film of any of claims 1-3, having an oxygen transmission rate from 5,000 to 9,000 cc/m$^2$/24hr as measured in accordance with ASTM D 3985-05.

5. The multilayer film of any of claims 1-4, wherein the component of the inner layer is a propylene homopolymer having a density of 0.88-0.92 g/cc as measured using ASTM D792-00, Method B, a melt flow rate of 1.0-2.1 g/10 min as measured using ASTM D-1238-04, condition 230°C/2.16 kg, and a crystallinity of 40-60%, and the outer layers each consist of a linear low density polyethylene that is an ethylene/octene copolymer having a density of 0.91-0.93 g/cc as measured using ASTM D792-00, Method B, a melt index of 0.1-10 g/10 min as measured using ASTM D-1238-04, condition 190°C/2.16 kg, and a crystallinity of 40-50%.

6. The multilayer film of any of claims 1-4, wherein the component of the inner layer is a propylene/ethylene copolymer having a density of 0.85-0.95 g/cc as measured using ASTM D792-00, Method B, a melt flow rate of 0.1-2.0 g/10 min as measured using ASTM D-1238-04, condition 230°C/2.16 kg, and a crystallinity of 20-40% and the outer layers each consist of a linear low density polyethylene that is an ethylene/octene copolymer having a density of 0.91-0.93 g/cc as measured using ASTM D792-00, Method B, a melt index of 0.1-10 g/10 min as measured using ASTM D-1238-04, condition 190°C/2.16 kg, and a crystallinity of 40-50%.

7. The multilayer film of any of claims 1-4, wherein the component of the inner layer is a high density polyethylene that is an ethylene/butene copolymer having a density of 0.94-0.97 g/cc as measured using ASTM D792-00, Method B, a melt index of 0.1-10 g/10 min as measured using ASTM D-1238-04, condition 190°C/2.16 kg, and a crystallinity of 40-60% and the outer layers each consist of a linear low density polyethylene that is an ethylene/octene copolymer having a density of 0.91-0.93 g/cc as measured using ASTM D792-00, Method B, a melt index of 0.1-10 g/10 min as measured using ASTM D-1238-04, condition 190°C/2.16 kg, and a crystallinity of 40-50%.

8. A method for producing bale silage comprising:

wrapping a wrapping film around a bale of a forage crop, wherein the film comprises a multilayer film according to any of claims 1-7;
forming, with the wrapping film, an airtight barrier around the bale; and
preventing, with the barrier, less than 10,800 cc/m$^2$/24hr of oxygen to contact the bale.

**9.** The method of claim 8, comprising stretching the wrapping film during the wrapping.


**Patentansprüche**

**1.** Eine Mehrschichtfolie, die Folgendes beinhaltet:

eine innere Schicht, die zwischen einer ersten äußeren Schicht und einer zweiten äußeren Schicht liegt, wobei die innere Schicht aus einer Komponente besteht, die aus der Gruppe ausgewählt ist, die aus Folgenden besteht: (a) einem Polyethylen hoher Dichte, das ein Ethylen/Buten-Copolymer ist, mit einer Dichte von 0,940 g/cm$^3$ bis 0,970 g/cm$^3$, gemessen unter Verwendung von ASTM D792-00, Verfahren B, einem Schmelzindex von 0,1 g/10 min bis 10 g/10 min, gemessen unter Verwendung von ASTM D-1238-04, Bedingung 190 °C/2,16 kg, und einer Kristallinität von 40 % bis 60 %, (b) einem Propylen-Homopolymer mit einer Dichte von 0,88 g/cm$^3$ bis 0,92 g/cm$^3$, gemessen unter Verwendung von ASTM D792-00, Verfahren B, einer Schmelzfließgeschwindigkeit von 1,0 g/10 min bis 2,1 g/10 min, gemessen unter Verwendung von ASTM D-1238-04, Bedingung 230 °C/2,16 kg, und einer Kristallinität von 40 % bis 60 % und (c) einem Propylen/Ethylen-Copolymer mit einer Dichte von 0,85 g/cm$^3$ bis 0,95 g/cm$^3$, gemessen unter Verwendung von ASTM D792-00, Verfahren B, einer Schmelzfließgeschwindigkeit von 0,1 g/10 min bis 2,0 g/10 min, gemessen unter Verwendung von ASTM D-1238-04, Bedingung 230 °C/2,16 kg, und einer Kristallinität von 20 % bis 40 %;
wobei die erste äußere Schicht und die zweite äußere Schicht gleich oder verschieden sind, wobei jede äußere Schicht aus einem linearen Polyethylen niedriger Dichte besteht, das ein Ethylen/Octen-Copolymer ist, mit einer Dichte von 0,91 g/cm$^3$ bis 0,93 g/cm$^3$, gemessen unter Verwendung von ASTM D792-00, Verfahren B, einem Schmelzindex von 0,1 g/10 min bis 10 g/10 min, gemessen unter Verwendung von ASTM D-1238-04, Bedingung 190 °C/2,16 kg, und einer Kristallinität von 40 % bis 50 %, wobei eine Dicke mindestens einer äußeren Schicht größer ist als die Dicke der inneren Schicht, wobei die Mehrschichtfolie eine Dicke von 1 μm (Mikrometer) bis 100 μm (Mikrometern) aufweist, wobei die Mehrschichtfolie eine Sauerstoffdurchlässigkeitsrate von weniger als 10 800 cm$^3$/m$^2$/24 h, gemessen gemäß ASTM D 3985-05, aufweist.

**2.** Mehrschichtfolie gemäß Anspruch 1, wobei die Dicke jeder äußeren Schicht größer ist als die Dicke der inneren Schicht.

**3.** Mehrschichtfolie gemäß einem der Ansprüche 1-2, wobei die innere Schicht eine Dicke von weniger als oder gleich 20 % der Gesamtdicke der Folie aufweist.

**4.** Mehrschichtfolie gemäß einem der Ansprüche 1-3, die eine Sauerstoffdurchlässigkeitsrate von 5000 bis 9000 cm$^3$/m$^2$/24 h, gemessen gemäß ASTM D 3985-05, aufweist.

**5.** Mehrschichtfolie gemäß einem der Ansprüche 1-4, wobei die Komponente der inneren Schicht ein Propylen-Homopolymer mit einer Dichte von 0,88-0,92 g/cm$^3$, gemessen unter Verwendung von ASTM D792-00, Verfahren B, einer Schmelzfließgeschwindigkeit von 1,0-2,1 g/10 min, gemessen unter Verwendung von ASTM D-1238-04, Bedingung 230 °C/2,16 kg, und einer Kristallinität von 40-60 % ist, und die äußeren Schichten jeweils aus einem linearen Polyethylen niedriger Dichte, das ein Ethylen/Octen-Copolymer ist, mit einer Dichte von 0,91-0,93 g/cm$^3$, gemessen unter Verwendung von ASTM D792-00, Verfahren B, einem Schmelzindex von 0,1-10 g/10 min, gemessen unter Verwendung von ASTM D-1238-04, Bedingung 190 °C/2,16 kg, und einer Kristallinität von 40-50 % bestehen.

**6.** Mehrschichtfolie gemäß einem der Ansprüche 1-4, wobei die Komponente der inneren Schicht ein Propylen/Ethylen-Copolymer mit einer Dichte von 0,85-0,95 g/cm$^3$, gemessen unter Verwendung von ASTM D792-00, Verfahren B, einer Schmelzfließgeschwindigkeit von 0,1-2,0 g/10 min, gemessen unter Verwendung von ASTM D-1238-04, Bedingung 230 °C/2,16 kg, und einer Kristallinität von 20-40 % ist, und die äußeren Schichten jeweils aus einem linearen Polyethylen niedriger Dichte, das ein Ethylen/Octen-Copolymer ist, mit einer Dichte von 0,91-0,93 g/cm$^3$, gemessen unter Verwendung von ASTM D792-00, Verfahren B, einem Schmelzindex von 0,1-10 g/10 min, gemessen unter Verwendung von ASTM D-1238-04, Bedingung 190 °C/2,16 kg, und einer Kristallinität von 40-50 % bestehen.

**7.** Mehrschichtfolie gemäß einem der Ansprüche 1-4, wobei die Komponente der inneren Schicht ein Polyethylen hoher Dichte, das ein Ethylen/Buten-Copolymer ist, mit einer Dichte von 0,94-0,97 g/cm$^3$, gemessen unter Verwendung von ASTM D792-00, Verfahren B, einem Schmelzindex von 0,1-10 g/10 min, gemessen unter Verwendung von ASTM D-1238-04, Bedingung 190 °C/2,16 kg, und einer Kristallinität von 40-60 % ist, und die äußeren Schichten jeweils aus einem linearen Polyethylen niedriger Dichte, das ein Ethylen/Octen-Copolymer ist, mit einer Dichte von 0,91-0,93 g/cm$^3$, gemessen unter Verwendung von ASTM D792-00, Verfahren B, einem Schmelzindex von 0,1-10 g/10 min, gemessen unter Verwendung von ASTM D-1238-04, Bedingung 190 °C/2,16 kg, und einer Kristallinität von 40-50 % bestehen.

**8.** Ein Verfahren zur Herstellung von Ballensilage, das Folgendes beinhaltet:

Wickeln einer Wickelfolie um einen Ballen einer Futterpflanze, wobei die Folie eine Mehrschichtfolie gemäß einem der Ansprüche 1-7 beinhaltet;
Bilden einer luftdichten Sperrschicht mit der Wickelfolie um den Ballen; und
Verhindern, mit der Sperrschicht, dass weniger als 10 800 cm$^3$/m$^2$/24 h Sauerstoff mit dem Ballen in Kontakt kommt.

**9.** Verfahren gemäß Anspruch 8, das das Dehnen der Wickelfolie während des Wickelns beinhaltet.

**Revendications**

**1.** Un film multicouche comprenant :

une couche interne située entre une première couche externe et une deuxième couche externe, la couche interne étant constituée d'un constituant sélectionné dans le groupe constitué (a) d'un polyéthylène haute densité qui est un copolymère d'éthylène/butène ayant une masse volumique allant de 0,940 g/cm$^3$ à 0,970 g/cm$^3$ telle que mesurée à l'aide de l'ASTM D792-00, Méthode B, un indice de fluidité à chaud allant de 0,1 g/10 min à 10 g/10 min tel que mesuré à l'aide de l'ASTM D-1238-04, condition 190 °C/2,16 kg et une cristallinité allant de 40 % à 60 %, (b) d'un homopolymère de propylène ayant une masse volumique allant de 0,88 g/cm$^3$ à 0,92 g/cm$^3$ telle que mesurée à l'aide de l'ASTM D792-00, Méthode B, un indice de fluidité à l'état fondu allant de 1,0 g/10 min à 2,1 g/10 min tel que mesuré à l'aide de l'ASTM D-1238-04, condition 230 °C/2,16 kg, et une cristallinité allant de 40 % à 60 % et (c) d'un copolymère de propylène/éthylène ayant une masse volumique allant de 0,85 g/cm$^3$ à 0,95 g/cm$^3$ telle que mesurée à l'aide de l'ASTM D792-00, Méthode B, un indice de fluidité à l'état fondu allant de 0,1 g/10 min à 2,0 g/10 min tel que mesuré à l'aide de l'ASTM D-1238-04, condition 230 °C/2,16 kg, et une cristallinité allant de 20 % à 40 % ;
la première couche externe et la deuxième couche externe étant identiques ou différentes, chaque couche externe étant constituée d'un polyéthylène basse densité linéaire qui est un copolymère d'éthylène/octène ayant une masse volumique allant de 0,91 g/cm$^3$ à 0,93 g/cm$^3$ telle que mesurée à l'aide de l'ASTM D792-00, Méthode B, un indice de fluidité à chaud allant de 0,1 g/10 min à 10 g/10 min tel que mesuré à l'aide de l'ASTM D-1238-04, condition 190 °C/2,16 kg, et une cristallinité allant de 40 % à 50 %, dans lequel une épaisseur d'au moins une couche externe est supérieure à l'épaisseur de la couche interne, le film multicouche ayant une épaisseur allant de 1 $\mu$m (micron) à 100 $\mu$m (microns), le film multicouche ayant une vitesse de transmission d'oxygène inférieure à 10 800 cm$^3$/m$^2$/24 h telle que mesurée conformément à l'ASTM D 3985-05.

**2.** Le film multicouche de la revendication 1, dans lequel l'épaisseur de chaque couche externe est supérieure à l'épaisseur de la couche interne.

**3.** Le film multicouche de n'importe lesquelles des revendications 1 à 2, dans lequel la couche interne a une épaisseur inférieure ou égale à 20 % de l'épaisseur totale du film.

**4.** Le film multicouche de n'importe lesquelles des revendications 1 à 3, ayant une vitesse de transmission d'oxygène allant de 5 000 à 9 000 cm$^3$/m$^2$/24 h telle que mesurée conformément à l'ASTM D 3985-05.

**5.** Le film multicouche de n'importe lesquelles des revendications 1 à 4, dans lequel le constituant de la couche interne est un homopolymère de propylène ayant une masse volumique de 0,88 à 0,92 g/cm$^3$ telle que mesurée à l'aide de l'ASTM D792-00, Méthode B, un indice de fluidité à l'état fondu de 1,0 à 2,1 g/10 min tel que mesuré à l'aide de l'ASTM D-1238-04, condition 230 °C/2,16 kg, et une cristallinité de 40 à 60 %, et les couches externes sont chacune constituées d'un polyéthylène basse densité linéaire qui est un copolymère d'éthylène/octène ayant une masse volumique de 0,91 à 0,93 g/cm$^3$ telle que mesurée à l'aide de l'ASTM D792-00, Méthode B, un indice de fluidité à chaud de 0,1 à 10 g/10 min tel que mesuré à l'aide de l'ASTM D-1238-04, condition 190 °C/2,16 kg, et une cristallinité de 40 à 50 %.

**6.** Le film multicouche de n'importe lesquelles des revendications 1 à 4, dans lequel le constituant de la couche interne est un copolymère de propylène/éthylène ayant une masse volumique de 0,85 à 0,95 g/cm$^3$ telle que mesurée à l'aide de l'ASTM D792-00, Méthode B, un indice de fluidité à l'état fondu de 0,1 à 2,0 g/10 min tel que mesuré à l'aide de l'ASTM D-1238-04, condition 230 °C/2,16 kg, et une cristallinité de 20 à 40 % et les couches externes sont chacune constituées d'un polyéthylène basse densité linéaire qui est un copolymère d'éthylène/octène ayant une masse volumique de 0,91 à 0,93 g/cm$^3$ telle que mesurée à l'aide de l'ASTM D792-00, Méthode B, un indice de fluidité à chaud de 0,1 à 10 g/10 min tel que mesuré à l'aide de l'ASTM D-1238-04, condition 190 °C/2,16 kg, et une cristallinité de 40 à 50 %.

**7.** Le film multicouche de n'importe lesquelles des revendications 1 à 4, dans lequel le constituant de la couche interne est un polyéthylène haute densité qui est un copolymère d'éthylène/butène ayant une masse volumique de 0,94 à 0,97 g/cm$^3$ telle que mesurée à l'aide de l'ASTM D792-00, Méthode B, un indice de fluidité à chaud de 0,1 à 10 g/10 min tel que mesuré à l'aide de l'ASTM D-1238-04, condition 190 °C/2,16 kg, et une cristallinité de 40 à 60 % et les couches externes sont chacune constituées d'un polyéthylène basse densité linéaire qui est un copolymère d'éthylène/octène ayant une masse volumique de 0,91 à 0,93 g/cm$^3$ telle que mesurée à l'aide de l'ASTM D792-00, Méthode B, un indice de fluidité à chaud de 0,1 à 10 g/10 min tel que mesuré à l'aide de l'ASTM D-1238-04, condition 190 °C/2,16 kg, et une cristallinité de 40 à 50 %.

**8.** Un procédé pour la production d'un ensilage en balles comprenant :

le fait d'envelopper un film d'enveloppement autour d'une balle d'une culture fourragère, dans lequel le film comprend un film multicouche selon n'importe lesquelles des revendications 1 à 7 ;
le fait de former, avec le film d'enveloppement, une barrière étanche à l'air autour de la balle ; et
le fait d'empêcher, avec la barrière, moins de 10 800 cm$^3$/m$^2$/24 h d'oxygène d'entrer en contact avec la balle.

**9.** Le procédé de la revendication 8, comprenant le fait d'étirer le film d'enveloppement durant l'enveloppement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050058791 A
- US 5324800 A
- US 5132380 A
- US 5047468 A

**Non-patent literature cited in the description**

- the Periodic Table of the Elements herein shall refer to the Periodic Table of the Elements. CRC Press, Inc, 2003
- **WILLIAMS ; WARD, J.** *Polym. Sci., Polym. Let.,* 1968, vol. 6, 621